# EUROPÄISCHE PATENTSCHRIFT

(11) **EP 1 377 802 B1**
(45) Veröffentlichungstag und Bekanntmachung des Hinweises auf die Patenterteilung: **21.06.2006**
(21) Anmeldenummer: 02715417.8
(22) Anmeldetag: 12.01.2002
(51) Int. Cl.: G01F 23/292

(54) **VORRICHTUNG UND VERFAHREN ZUR KONTROLLE DES FÜLLSTANDES VON BEWEGTEN, TRANSPARENTEN BEHÄLTERN**
DEVICE AND METHOD FOR CHECKING THE LEVEL OF MOVING TRANSPARENT CONTAINERS
DISPOSITIF ET PROCEDE DE SURVEILLANCE DU NIVEAU DE REMPLISSAGE DE CONTENANTS TRANSPARENTS MOBILES

(30) Priorität: 12.04.2001 DE 10118323
(43) Veröffentlichungstag der Anmeldung: 07.01.2004
(73) Patentinhaber: KHS Metec GmbH, 56651 Niederzissen (DE)
(72) Erfinder: SEETHALER, Bernd, Franz, 22307 Hamburg (DE)
(74) Vertreter: Hauck, Graalfs, Wehnert, Döring, Siemons
(86) Internationale Anmeldenummer: PCT/EP2002/000240
(87) Internationale Veröffentlichungsnummer: WO 2002/084229

(56) Entgegenhaltungen:
- DE-A- 2 437 798
- DE-A- 3 128 094
- DE-A- 3 913 730
- GB-A- 969 301
- US-A- 4 857 050

## Beschreibung

Die Erfindung betrifft eine Vorrichtung und Verfahren zur Kontrolle des Füllstandes von bewegten, transparenten Behältern.

Aus DE 31 28 094 C2 ist ein Verfahren zum Messen des Füllstandes von durchsichtigen oder durchscheinenden Behältern bekannt, die auf einem Förderband entlang einer Meßstation bewegt werden. Die Behälter werden jeweils mit einer vorbestimmten Anzahl von in zeitlichem Abstand aufeinanderfolgenden Lichtblitzen aus einem Infrarot-Laser beaufschlagt, wobei in einem vorgegebenen Flächenbereich aus dem Behälter austretende Lichtblitze auf eine Fotokathode eines Fotovervielfachers treffen und zu einem Ausgangssignal aufzntegriert werden. Aus dem erhaltenen Integrationswert läßt sich ermitteln, ob die Beaufschlagung mit Lichtblitzen in einem gefüllten oder ungefüllten Bereich des Behälters erfolgte. Nachteilig an diesem Verfahren ist, daß die Geschwindigkeit des Bandes erfaßt werden muß und die Anzahl der gemessenen Pulse von der Geometrie und dem Material des Behälters abhängt.

Der Erfindung liegt die Aufgabe zugrunde, eine Vorrichtung und ein Verfahren zur Kontrolle des Füllstands von bewegten, transparenten Behältern bereitzustellen, die bzw. das einfach und in zuverlässiger Weise den Füllstand eines sich bewegenden Behälters kontrolliert.

Erfindungsgemäß wird die Aufgabe durch eine Vorrichtung mit den Merkmalen aus Anspruch 1 gelöst.

Die erfindungsgemäße Vorrichtung besitzt mindestens eine lichtempfindliche Sensoreinheit, eine auf die Sensoreinheit gerichtete Lichtquelle und eine Auswerteeinrichtung für Sensorsignale der Sensoreinheit. Die Sensoreinheit erzeugt Sensorsignale, die von der Position des gefühlten Lichtstrahls abhängen. Die Sensorsignale können beispielsweise durch einen lichtempfindlichen Positionssensor (PSD) erzeugt werden. In einer besonders einfach herzustellenden Ausführung besitzt die Sensoreinheit mindestens zwei Sensoren oder Sensorbereiche, die unabhängig voneinander Sensorsignale erzeugen. Auf einen ersten Sensor bzw. Sensorbereich ist der Lichtstrahl direkt gerichtet. Der Lichtstrahl trifft also auf den ersten Sensor, wenn sich kein Behälter zwischen Lichtquelle und Sensor befindet. Der Lichtstrahl trifft ebenfalls auf den ersten Sensor, wenn der Lichtstrahl durch einen im Bereich des Laserstrahls nicht gefüllten Behälter nicht oder nur geringfügig abgelenkt wird. Auf einen zweiten Sensor bzw. Sensorbereich fällt ein Lichtstrahl, der durch einen mit Füllgut gefüllten Behälter abgelenkt ist. Die Auswerteeinrichtung ermittelt aus der zeitlichen Abfolge der Sensorsignale, ob der Füllstand in dem Behälter vorliegt oder nicht. Aufgrund des Berechnungsindex des Füllguts wird der Lichtstrahl in Bewegungsrichtung des Behälters abgelenkt, wenn der Behälter sich zwischen Lichtquelle und Sensoreinheit hindurch bewegt. Bei der erfindungsgemäßen Vorrichtung wird der durch den Behälter hindurchtretende Lichtstrahl in dem Fall, daß der Behälter gefüllt ist, abgelenkt und trifft in einer anderen Position auf die Sensoreinheit. Hierdurch registriert die Auswerteeinrichtung aufeinanderfolgend zuerst ein Sensorsignal für die erste und nachfolgend für die zweite Position. Indem die Auswerteeinrichtung, die Abfolge der Signale auswertet, ist die erfindungsgemäße Vorrichtung von der absoluten Position des Behälters und weiteren äußeren Einflüssen unabhängig. Unter Lichtstrahlung wird elektromagnetische Strahlung sowohl im sichtbaren Wellenlängenbereich als auch in den sich anschließenden Bereichen der ultravioletten, infraroten sowie der Röntgenstrahlung verstanden.

In einer bevorzugten Weiterbildung der erfindungsgemäßen Vorrichtung sind drei oder mehr Sensoren oder Sensorbereiche vorgesehen, die in Bewegungsrichtung des Behälters vor und hinter dem ersten Sensor angeordnet sind und auf die durch einen mit Füllgut gefüllten Behälter abgelenkte Lichtstrahlen fallen. Bevorzugt sind drei Sensoren vorgesehen, von denen der zweite in Bewegungsrichtung vor dem ersten Sensor und der dritte in Bewegungsrichtung hinter dem ersten Sensor angeordnet ist. Die Sensoren bzw. Sensorbereiche sind dabei jeweils so angeordnet, daß es Positionen des sich bewegenden Behälters relativ zu der Lichtquelle gibt, in denen bei gefülltem Behälter der Lichtstrahl derart abgelenkt wird, daß er auf diesen Sensor bzw. Sensorbereich fällt.

In der Ausgestaltung mit drei Sensoren spricht die Auswerteeinrichtung auf folgende Abfolge von Sensorsignalen an: zweiter, erster und dritter Sensor. Auf die Abfolge der Sensorsignale ansprechend erzeugt die Auswerteeinrichtung ein Signal, das den ausreichenden Füllstand in dem Behälter anzeigt. Besonders vorteilhaft hierbei ist, daß die Abfolge der Sensorsignale und somit das Erkennen des Füllstandes unabhängig von der Geometrie des Behälters und der Bewegungsgeschwindigkeit des Bandes erfolgt. Bevorzugt kann zusätzlich vorgesehen werden, daß die Auswerteeinrichtung auf ein Fehlen des ersten Sensorsignals anspricht und das Vorliegen der Abfolge von Sensorsignalen überprüft.

Als Lichtquelle ist bevorzugt ein Diodenlasermodul vorgesehen. Die Wellenlänge des Laserlichts ist zweckmäßigerweise so gewählt, daß Behältermaterial und Füllgut für das Laserlicht transparent sind, beispielsweise Laserlicht im infraroten Bereich.

In einer bevorzugten Ausgestaltung der erfindungsgemäßen Vorrichtung besitzt die lichtempfindliche Sensoreinheit Fototransistoren und/oder Fotodioden.

Alternativ hierzu kann die lichtempfindliche Sensoreinheit auch einen CCD-Chip oder ein CCD-Feld aus lichtempfindlichen Fotoelementen aufweisen, wobei die Sensorbereiche durch Bereiche auf den lichtempfindlichen Fotoelementen gebildet sind.

In einer bevorzugten Ausgestaltung der Vorrichtung ist die Lichtquelle in ihrer Höhe relativ zu dem sich bewegenden Behälter einstellbar. Auf diese Weise kann die zu kontrollierende Füllstandshöhe auf ein jeweils anderes Niveau eingestellt werden.

Die erfindungsgemäße Aufgabe wird ebenfalls durch ein Verfahren mit den Merkmalen aus Anspruch 15 gelöst.

Bei dem erfindungsgemäßen Verfahren wird der bewegte Behälter mit einem Lichtstrahl im Bereich einer vorbestimmten Füllstandshöhe beaufschlagt. Eine Sensoreinrichtung fühlt die Position des durch den Behälter getretenen Lichtstrahls. Eine Auswerteeinrichtung bestimmt die zeitliche Positionsänderung des von der Sensoreinheit gefühlten Lichtstrahls. Der durch die Sensoreinheit gefühlte Lichtstrahl bewegt sich aufgrund der Bewegung des Behälters, wenn dieser mit einem Füllgut gefüllt ist. Die Sensoreinheit kann einen lichtempfindlichen Positionssensor und/oder zwei oder drei Sensoren aufweisen. Die Auswerteeinrichtung bestimmt, ob der Lichtstrahl in einem mit Füllgut gefüllten Bereich des Behälters abgelenkt wurde und erzeugt ein entsprechendes Signal.

Eine bevorzugte Ausführungsform der erfindungsgemäßen Vorrichtung wird anhand der nachfolgenden Zeichnungen näher erläutert. Es zeigt:
- Fig. 1: eine erste Ausführungsform der erfindungsgemäßen Vorrichtung mit einem leeren Behälter,
- Fig. 2: die Vorrichtung aus Fig. 1 mit einem gefüllten Behälter,
- Fig. 3: einer Ausführungsform der erfindungsgemäßen Vorrichtung mit drei Sensoren und einem gefüllten Behälter,
- Fig. 4: die Vorrichtung aus Fig. 3 mit einem leerem Behälter und
- Fig. 5: die erfindungsgemäße Vorrichtung integriert in ein Füllstandskontrollgerät.

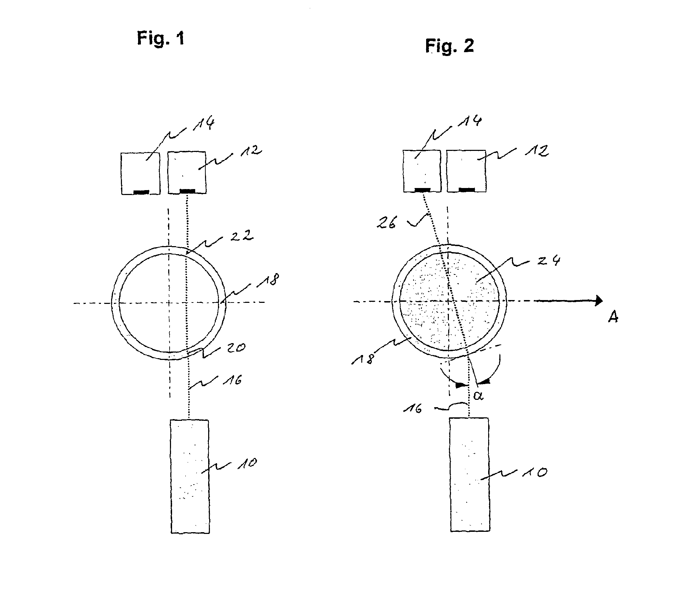

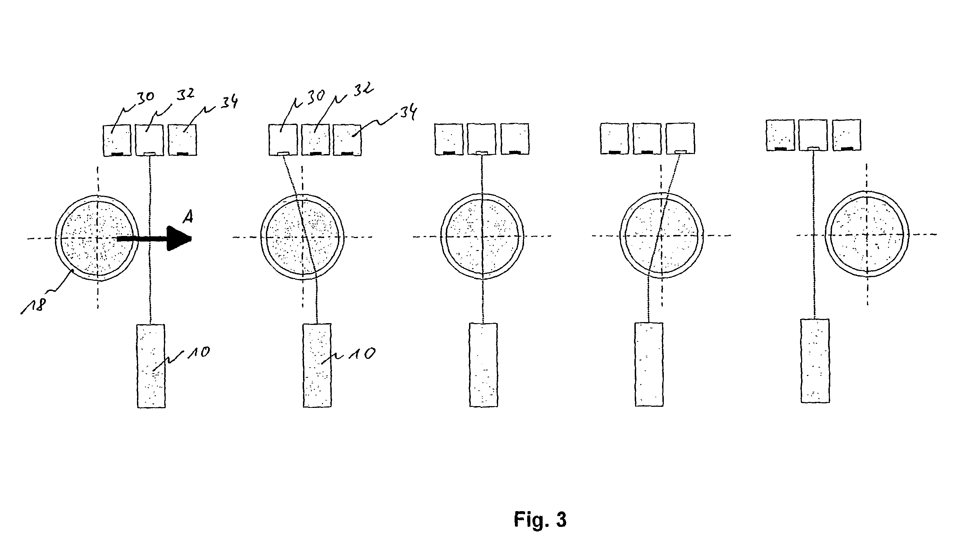

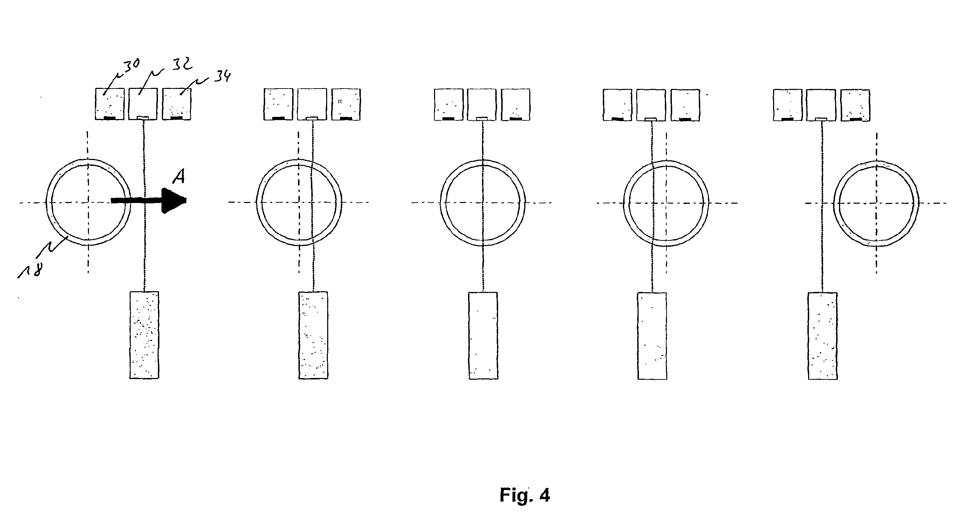

Fig. 1 zeigt eine Lichtquelle 10, der gegenüberliegend zwei Sensoren 12 und 14 angeordnet sind. Der Laserstrahl 16 aus dem Laser 10 tritt in dem Punkt 20 in den Behälter 18 ein, durchläuft diesen und tritt in dem Punkt 22 wieder aus. Der Durchtritt durch das Behältermaterial 18 bewirkt, daß der Laserstrahl 16 innerhalb des Behälters parallel zu dem Laserstrahl 16 außerhalb des Behälters versetzt ist. Insgesamt trifft der Laserstrahl 16 bei einem mit Luft gefüllten Behälter 18 auf den ersten Sensor 12. Während der Bewegung des Behälters 18 durch den Laserstrahl hindurch, wird der Laserstrahl nicht wesentlich aus seiner Position ausgelenkt.

Fig. 2 zeigt den Fall, in dem der Behälter 18 mit einer Flüssigkeit 24 gefüllt ist. Der Laserstrahl 16 tritt in den Behälter 18 ein und wird an dem Grenzübergang von Behältermaterial zu Flüssigkeit 24 um den Winkel α abgelenkt. Der abgelenkte Laserstrahl 26 trifft folglich auf den zweiten Sensor 14. Bei einer Bewegung des Behälters 18 in Richtung des Pfeils A liegt also zunächst das Sensorsignal des ersten Sensors vor. Erreicht der Behälter 18 die in Fig. 2 dargestellte Position, so liegt das Sensorsignal des zweiten Sensors 14 vor. Befindet sich der Behälter 18 genau mittig zwischen Laser 10 und Sensor 12, so erfolgt keine wesentliche Ablenkung des Laserstrahls und es liegt wieder das Signal des ersten Sensors vor. Mit einer weiteren Bewegung des Behälters wird der Laserstrahl in Bewegungsrichtung ausgelenkt, so daß nachfolgend kein Sensorsignal vorliegt. Aus der Abfolge der Sensorsignale bzw. dem Fehlen des Sensorsignals bestimmt die Auswerteeinrichtung, ob der Behälter 18 mit Flüssigkeit gefüllt ist.

Fig. 3 zeigt eine bevorzugte Ausgestaltung der erfindungsgemäßen Vorrichtung, bei der gegenüber der Lichtquelle 10 drei lichtempfindliche Sensoren 30, 32 und 34 angeordnet sind. Während sich ein gefüllter Behälter 18 zwischen dem Laser 10 und den lichtempfindlichen Sensoren hindurchbewegt, werden nacheinander Sensorsignale der Sensoren 30, 32 und 34 erzeugt. Mit anderen Worten die Strahlrichtung ändert sich infolge der sich veränderten Eintrittswinkels des Laserstrahls in den Behältern abhängig von Position des Behälters auf einem Förderband. Es resultiert ein sich bewegender Strahlfleck auf den Sensoren. Eine Auswerteelelctronik ermittelt die Bewegungsrichtung des Strahls auf den Sensoren und erzeugt ein Signal, daß der Behälter ausreichend gefüllt ist, wenn sich der auftreffende Lichtpunkt in Richtung der Bewegungsrichtung A bewegt. Alternativ zu den drei dargestellten Sensoren kann auch ein lichtempfindlicher Positionssensor vorgesehen sein, der die Position des Lichtstrahls kontinuierlich fühlt. Bei dem Einsatz von lichtempfindlichen Feldern können einzelne oder mehrere Felder zu Bereich zusammengefaßt werden.

Fig. 4 zeigt die Vorrichtung aus Fig. 3 beim Durchlaufen eines nicht gefüllten Behälters. Hierbei ist der Sensor 32 die gesamte Zeit aktiviert, so daß kein Signal über eine ausreichende Füllung des Behälters 18 erzeugt wird.

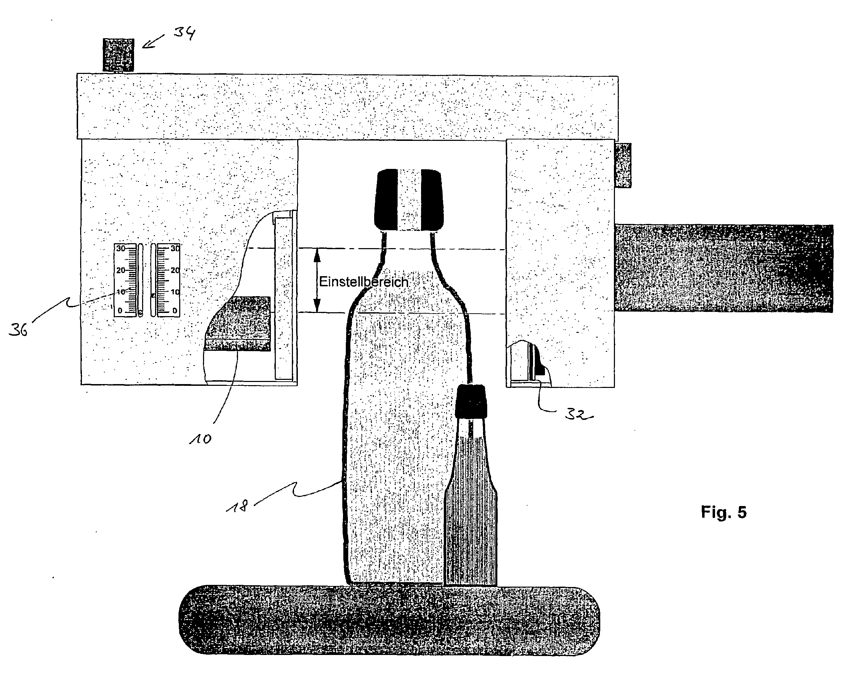

Fig. 5 zeigt die erfindungsgemäße Vorrichtung integriert in ein Gerät zur Füllstandskontrolle. Die Lichtquelle 10 ist mittels einer nicht dargestellten Höhenverstellung in der Höhe einstellbar. Die Höhenverstellung kann beispielsweise über den auf der Oberseite des Gerätes angeordneten Drehknopf erfolgen. Zur Kontrolle des Füllstandes und der aktuell eingestellten Kontrollhöhe ist eine von außen ablesbare Skala 36 vorgesehen. Die lichtempfindlichen Sensoren können sich in Richtung der Höhenverstellung erstrecken oder alternativ dazu mit der Lichtquelle höhenverstellbar sein. Ebenfalls kann eine abbildende Optik für die lichtempfindlichen Sensoren vorgesehen sein, die die einfallenden Lichtstrahlen beispielsweise auf eine kleine Sensorfläche abbildet. Die zu kontrollierenden Behälter 18 laufen auf einem Förderband 38 durch das Gerät. Mit der Auswerteeinrichtung verbunden ist eine Sortiereinrichtung, die die nicht ausreichend gefüllten Flaschen aussortiert, wenn für diese Flaschen kein Signal über eine ausreichende Füllung von der Auswerteeinrichtung vorliegt. Die Flaschen fahren auf einem Förderband 38 an der Lichtquelle 10 vorbei. Um sowohl eine maximale als auch minimale Befüllung zu prüfen, können zwei Lichtquellen übereinander angeordnet werden. Um deren Lichtsignale mit einer gemeinsamen Sensoreinheit getrennt auswerten zu können, werden die Lichtquellen abwechselnd eingeschaltet.

## Patentansprüche

1. Vorrichtung zur Kontrolle des Füllstandes von bewegten, transparenten Behältern, mit
- mindestens einer lichtempfindlichen Sensoreinheit (12, 14; 30, 32, 34),
- einer Lichtquelle (10), die einen Lichtstrahl auf die Sensoreinheit richtet, und
- einer Auswerteeinrichtung für Sensorsignale der Sensoreinheit,
**dadurch gekennzeichnet, daß**
- die Sensoreinheit Sensorsignale erzeugt, die der Position des Lichtstrahls auf der Sensoreinheit entsprechen,
- die Auswerteeinrichtung aus den Sensorsignalen die Position des Lichtstrahls auf der Sensoreinheit bestimmt und aus der zeitlichen Abfolge der Positionen des Lichtstrahls ermittelt, ob der Lichtstrahl durch einen mit Füllgut gefüllten Behälter abgelenkt wurde.

2. Vorrichtung nach Anspruch 1, **dadurch gekennzeichnet, daß** die lichtempfindliche Sensoreinheit einen lichtempfindlichen Positionssensor (PSD) aufweisen, der die Position des auftretenden Lichtstrahls fühlt.

3. Vorrichtung nach Anspruch 1, **dadurch gekennzeichnet, daß** die Sensoreinheit mindestens zwei Sensoren oder zwei Sensorbereiche aufweist, die unabhängig voneinander Sensorsignale erzeugen können, wobei der Lichtstrahl direkt auf einen ersten Sensor bzw. Sensorbereich gerichtet ist und der Lichtstrahl auf einen zweiten Sensor bzw. Sensorbereich fällt, wenn er durch einen mit Füllgut gefüllten Behälter abgelenkt wird.

4. Vorrichtung nach Anspruch 3, **dadurch gekennzeichnet, daß** drei oder mehr Sensoren oder Sensorbereiche vorgesehen sind, die in Bewegungsrichtung vor und hinter dem ersten Sensor angeordnet sind und auf die Lichtstrahlen fallen, die durch einen mit Füllgut gefüllten Behälter in drei unterschiedlichen Positionen nacheinander abgelenkt werden.

5. Vorrichtung nach Anspruch 4, **dadurch gekennzeichnet, daß** drei Sensoren oder Sensorbereiche vorgesehen sind, von denen der zweite in Bewegungsrichtung vor dem ersten Sensor und der dritte in Bewegungsrichtung hinter dem ersten Sensor angeordnet ist.

6. Vorrichtung nach Anspruch 5, **dadurch gekennzeichnet, daß** die Auswerteeinrichtung auf folgende Abfolge von Sensorsignalen: zweiter, erster und dritter Sensor bzw. Sensorbereich ansprechend ein den ausreichenden Füllstand anzeigendes Signal erzeugt.

7. Vorrichtung nach Anspruch 6, **dadurch gekennzeichnet, daß** die Auswerteeinrichtung ansprechend auf ein Fehlen des ersten Sensorsignals bei Auftreten der Abfolge von Signalen das den ausreichenden Füllstand anzeigende Signal erzeugt.

8. Vorrichtung nach einem der Ansprüche 3 bis 7, **dadurch gekennzeichnet, daß** die lichtempfindliche Sensoreinheit Fototransistoren und/oder Fotodioden auf weist.

9. Vorrichtung nach einem der Ansprüche 3 bis 7, **dadurch gekennzeichnet, daß** die lichtempfindliche Sensoreinheit einen CCD-Chip oder ein CCD-Array aus lichtempfindlichen Fotoelementen aufweist, wobei die Sensorbereiche durch Bereiche auf dem lichtempfindlichen Fotoelement gebildet sind.

10. Vorrichtung nach einem der Ansprüche 1 bis 9, **dadurch gekennzeichnet, daß** als Lichtquelle ein Diodenlasermodul vorgesehen ist.

11. Vorrichtung nach Anspruch 10, **dadurch gekennzeichnet, daß** das Diodenlasermodul eine Wellenlänge aufweist derart, daß das Behältermaterial und das Füllgut transparent sind.

12. Vorrichtung nach einem der Ansprüche 1 bis 11, **dadurch gekennzeichnet, daß** die Lichtquelle in ihrer Höhe relativ zu den sich bewegenden Behältern einstellbar ist.

13. Vorrichtung nach einem der Ansprüche 1 bis 12, **dadurch gekennzeichnet, daß** zwei Lichtquellen in unterschiedlicher Höhe relativ zu den sich bewegenden Behältern vorgesehen sind.

14. Vorrichtung nach Anspruch 13, **dadurch gekennzeichnet, daß** die Lichtquellen auf eine gemeinsame Sensoreinheit gerichtet sind und abwechselnd einen Lichtstrahl auf diese richten.

15. Verfahren zur Kontrolle des Füllstandes von bewegten, transparenten Behälter, mit folgenden Verfahrensschritten:
- der bewegte Behälter wird mit einem Lichtstrahl im Bereich einer vorbestimmten Füllstandshöhe beaufschlagt,
- eine Sensoreinheit fühlt die Position des durch den Behälter getretenen Lichtstrahls und
- eine Auswerteeinrichtung bestimmt aus den Sensorsignalen die Position des Lichtstrahls auf der Sensoreinheit und aus der zeitlichen Abfolge der Positionen des Lichtstrahls, ob der Lichtstrahl durch einen mit Füllgut gefüllten Behälter abgelenkt wurde.

16. Verfahren nach Anspruch 15, **dadurch gekennzeichnet, daß** die Auswerteeinrichtung auf zeitliche Positionsänderungen des gefühlten Lichtstrahls in Bewegungsrichtung des Behälters anspricht und ein den ausreichenden Füllstand anzeigendes Signal erzeugt.

## Claims

1. Apparatus for controlling the level of transparent containers that are in motion, said apparatus including
- at least one photosensitive sensor unit (12, 14; 30, 32, 34),
- a light source (10), which directs a light beam onto the sensor unit, and
- an evaluating unit for evaluating sensor signals of the sensor unit,
**characterised in that**
- the sensor unit generates sensor signals, which correspond to the position of the light beam on the sensor unit,
- the evaluating device determines the position of the light beam from the sensor signals and determines whether the light beam has been deflected through a container filled with a product from the time sequence of the positions of the light beam.

2. Apparatus according to claim 1, **characterised in that** the photosensitive sensor unit includes a photosensitive position sensor (PSD), which senses the position of the emerging light beam.

3. Apparatus according to claim 1, **characterised in that** the sensor unit includes at least two sensors or two sensor regions, which can generate sensor signals independently of one another, wherein the light beam is directed directly onto a first sensor or respectively a first sensor region and the light beam falls onto a second sensor or respectively a second sensor region when it is deflected by a container filled with a product.

4. Apparatus according to claim 3, **characterised in that** there are provided three or more sensors or sensor regions which, when viewed in the direction of movement, are disposed in front of and behind the first sensor and onto which light beams fall, which are deflected into three different positions one after the other through a container filled with a product.

5. Apparatus according to claim 4, **characterised in that** there are provided three sensors or sensor regions, the second sensor or respectively the second sensor region of which, when viewed in the direction of movement, is disposed in front of the first sensor or the first sensor region and the third sensor or respectively the third sensor region, when viewed in the direction of movement, is disposed behind the first sensor or respectively the first sensor region.

6. Apparatus according to claim 5, **characterised in that** the evaluating unit generates a signal indicating the level is sufficient responding to the following sequence of sensor signals: second, first and third sensor or respectively sensor region.

7. Apparatus according to claim 6, **characterised in that**, responding to a lack of the first sensor signal when the sequence of signals emerges, the evaluating unit generates the signal indicating the level is sufficient.

8. Apparatus according to one of claims 3 to 7, **characterised in that** the photosensitive sensor unit includes phototransistors and/or photodiodes.

9. Apparatus according to one of claims 3 to 7, **characterised in that** the photosensitive sensor unit includes a CCD chip or a CCD array from photosensitive photo elements, wherein the sensor regions are formed by regions on the photosensitive photo element.

10. Apparatus according to one of claims 1 to 9, **characterised in that** a diode laser module is provided as the light source.

11. Apparatus according to claim 10, **characterised in that** the diode laser module includes a wavelength in such a manner that the container material and the product are transparent.

12. Apparatus according to one of claims 1 to 11, **characterised in that** the light source is vertically adjustable relative to the moving containers.

13. Apparatus according to one of claims 1 to 12, **characterised in that** two light sources are provided at different heights relative to the moving containers.

14. Apparatus according to claim 13, **characterised in that** the light sources are directed onto a common sensor unit and alternately direct a light beam onto the said sensor unit.

15. Method for controlling the level of transparent containers that are in motion, said method having the following method steps:
- the moved container is impinged upon by a light beam in the region of a pre-determined level,
- a sensor unit senses the position of the light beam that has traversed the container and
- an evaluating device determines the position of the light beam on the sensor unit from the sensor signals and whether the light beam has been deflected through a container filled with a product from the time sequence of the positions of the light beam.

16. Method according to claim 15, **characterised in that** the evaluating device responds to changes in the positions of the sensed light beam in time in the direction of movement of the container and generates a signal indicating the level is sufficient.

## Revendications

1. Dispositif pour le contrôle du niveau de récipients transparents en mouvement, avec
- au moins une unité de détection photosensible (12, 14 ; 30, 32, 34),
- une source lumineuse (10) qui oriente un rayon lumineux vers l'unité de détection, et
- un dispositif d'évaluation pour les signaux des détecteurs de l'unité de détection,
**caractérisé en ce que**
- l'unité de détection génère des signaux de détecteurs qui correspondent à la position du rayon lumineux sur l'unité de détection,
- le dispositif d'évaluation détermine la position du rayon lumineux sur l'unité de détection à partir des signaux de détecteurs et, à partir de la séquence temporelle des positions du rayon lumineux, détermine si le rayon lumineux a été dévié par un récipient rempli avec un produit de remplissage.

2. Dispositif selon la revendication 1, **caractérisé en ce que** l'unité de détection photosensible comporte un détecteur de position photosensible (PSD) qui détecte la position du rayon lumineux généré.

3. Dispositif selon la revendication 1, **caractérisé en ce que** l'unité de détection comporte au moins deux détecteurs ou deux zones de détection qui peuvent générer des signaux de détecteurs indépendants les uns des autres, le rayon lumineux étant orienté directement sur un premier détecteur ou une première zone de détection et le rayon lumineux tombant sur un deuxième détecteur ou une deuxième zone de détection lorsqu'il est dévié par un récipient rempli avec un produit de remplissage.

4. Dispositif selon la revendication 3, **caractérisé en ce qu'**il est prévu trois détecteurs ou zones de détection ou plus qui sont disposés devant et derrière le premier détecteur, dans le sens de déplacement, et qui tombent sur les rayons lumineux qui sont déviés par un récipient rempli avec un produit de remplissage dans trois positions différentes successives.

5. Dispositif selon la revendication 4, **caractérisé en ce qu'**il est prévu trois détecteurs ou zones de détection dont le deuxième détecteur, dans le sens de déplacement, est disposé devant le premier détecteur, et le troisième détecteur, dans le sens de déplacement, est disposé derrière le premier détecteur.

6. Dispositif selon la revendication 5, **caractérisé en ce que** le dispositif d'évaluation génère un signal indiquant le niveau suffisant en réponse à la séquence suivante de signaux de détecteurs : deuxième, premier et troisième détecteur ou zone de détection.

7. Dispositif selon la revendication 6, **caractérisé en ce que** le dispositif d'évaluation génère le signal indiquant le niveau suffisant en réponse à une absence du premier signal de détecteur lors du déroulement de la séquence de signaux.

8. Dispositif selon l'une quelconque des revendications 3 à 7, **caractérisé en ce que** l'unité de détection photosensible comporte des phototransistors et/ou des photodiodes.

9. Dispositif selon l'une quelconque des revendications 3 à 7, **caractérisé en ce que** l'unité de détection photosensible comporte une puce CCD ou une barrette CCD de cellules photoélectriques photosensibles, les zones de détection étant formées par des zones sur les cellules photoélectriques photosensibles.

10. Dispositif selon l'une quelconque des revendications 1 à 9, **caractérisé en ce qu'**il est prévu un module de diodes laser comme source lumineuse.

11. Dispositif selon la revendication 10, **caractérisé en ce que** le module de diodes laser a une longueur d'onde telle que la matière des récipients et le produit de remplissage sont transparents.

12. Dispositif selon l'une quelconque des revendications 1 à 11, **caractérisé en ce que** la source lumineuse est réglable en hauteur par rapport aux récipients en mouvement.

13. Dispositif selon l'une quelconque des revendications 1 à 12, **caractérisé en ce qu'**il est prévu deux sources lumineuses à une hauteur différente par rapport aux récipients en mouvement.

14. Dispositif selon la revendication 13, **caractérisé en ce que** les sources lumineuses sont orientées vers une unité de détection commune et orientent alternativement un rayon lumineux dans cette direction.

15. Procédé pour le contrôle du niveau de récipients transparents en mouvement, avec les étapes de procédé suivantes :
- le récipient en mouvement reçoit un rayon lumineux dans la zone d'une hauteur de niveau prédéterminée,
- une unité de détection détecte la position du rayon lumineux passant à travers le récipient et
- un dispositif d'évaluation détermine la position du rayon lumineux sur l'unité de détection à partir des signaux de détecteurs et, à partir de la séquence temporelle des positions du rayon lumineux, détermine si le rayon lumineux a été dévié par un récipient rempli avec un produit de remplissage.

16. Procédé selon la revendication 15, **caractérisé en ce que** le dispositif d'évaluation réagit aux variations de positions temporelles du rayon lumineux détecté dans le sens de déplacement du récipient et génère un signal indiquant le niveau suffisant.
